Europäisches Patentamt

(19) European Patent Office

Office européen des brevets

(11) Publication number: **0 033 593**
**A2**

(12) # EUROPEAN PATENT APPLICATION

(21) Application number: **81300157.5**

(22) Date of filing: **14.01.81**

(51) Int. Cl.³: **H 02 J 3/14**

(30) Priority: **15.01.80 GB 8001338**
**12.06.80 GB 8019196**

(43) Date of publication of application:
**12.08.81 Bulletin 81/32**

(84) Designated Contracting States:
**BE DE FR IT**

(71) Applicant: **THORN DOMESTIC APPLIANCES
(ELECTRICAL) LIMITED
Thorn House Upper St. Martins Lane
London WC2H 9ED(GB)**

(72) Inventor: **Newton, John Stephen
92 Lion Lane Shottermill
Haslemere Surrey(GB)**

(72) Inventor: **Patel, Husein Abdul
88 Dore Avenue Portchester
Fareham Hampshire(GB)**

(74) Representative: **Ayers, Martyn Lewis Stanley
J.A. KEMP & CO. 14 South Square Gray's Inn
London WC2A 1AY(GB)**

(54) **Power control apparatus.**

(57) In order to limit the disturbance to the mains supply caused by periodic energisation and de-energisation of a resistive load such as the heater of the grill of an electric cooker, the heater is split into two heating elements which are energised alternately each for a period of time set by a user operable control 2. The mark to space ratio of the energisation of the partial loads 1a and 1b is varied in dependence upon the setting of the control 2. In order to provide fast response when the apparatus is first turned on, circuitry 16 overrides the proportion of control and energises both loads 1a and 1b simultaneously for a predetermined period of time long enough to bring the heater up to its working temperature.

Means are also disclosed to isolate the heaters in the event of failure of the triacs which control their energisation.

Fig.1.

- 1 -

DESCRIPTION

"POWER CONTROL APPARATUS"

The present invention relates to the control of resistive loads such as electric heating elements for use particularly, but not exclusively, in electric cookers.

In our British Patent No. 1464093 we describe and claim a heating arrangement for use in an electric cooker in which the desired heating level is stored as a binary number in a counter and a triac in series with the heating element is appropriately gated in dependence on the contents of the counter. User operable controls such as touch pads are associated with count-up and count-down inputs of the counter so that the set heating level can be increased or decreased by the user. In order to speed the response of the heating element to a change in the setting, the control circuitry was arranged so that following the user changing the desired heating level, for a period of time the user-set heating level is overridden and instead the maximum power available in the control range is applied to the heater.

In our copending Application No. 7940618, we describe and claim an electrical heating arrangement comprising at least one electrical heating element and control circuitry for controlling the power supply to the heating element, the control circuitry comprising a user-operable control, means for causing the power supplied to the heating element to have a value in a predetermined control range, the value being dependent upon the setting of the user-operable control, and means for causing the power supplied to the heating element to exceed the maximum value within the control range for a period following an increase in the set power.

Because of the problems of RFI generation

- 2 -

particularly with large resistive loads such as cooker
heating elements, it is preferred to control the power
to such loads on a "burst fire" basis rather than by means
of phase control.    Burst firing involves the supply of a
given, integral number of half cycles of the supply waveform
to the load per unit time.    Although operation in the
symmetrical burst fire mode largely avoids RFI problems, it
means that there are variations in the power drawn from
the mains supply over intervals of time considerably greater
than the period of the supply waveform.    Associated with
these variations in power drawn are fluctuations of the
line voltage brought about by the connection and
disconnection of the load to the supply lines.    In a number
of countries there are regulations or standards (for example
British Standard No. 5406 and the proposed EEC SENELEC
regulation) which seek to reduce the effects of these
fluctuations by defining an upper limit on the number of
changes in line voltage which a device is permitted to cause,
based on curves determined by various psychological,
biological and other considerations which relate the maximum
permissible number of energisations and de-energisations of
a device to the fractional fluctuation in line voltage which
they cause.    The "nuisance value" of a device is roughly
dependent on both the frequency and the magnitude of the
fluctuations in line voltage which it causes so that under
the draft SENELEC rule a device which causes relatively little
change in line voltage is permitted to cause more fluctuations
per unit time of the line voltage than a device which produces
more substantial fluctuations in line voltage.

    According to the present invention there is
provided a power control apparatus comprising: a resistive
load comprising at least two partial loads; and control
circuitry for cyclically energising the partial loads in
time interleaving relationship with one another.

    In the embodiment described below with reference
to the accompanying drawing, the load is the heater of the grill of an electric cooker, this being a split load made
up of two heating elements disposed in side-by-side
relation.   The control circuitry is arranged to control
respective triacs in series with the two heating elements
so that these are operated in the burst fire mode.   A
user-operable control is provided to vary the duty cycle
of the energisation of each of the heating elements.   The
heating elements are so designed that the rated output
of the heater as a whole is produced when the heating
elements are each operated with a 50% duty cycle, with
the on periods of one heating element coinciding with the
off periods of the other.   For lower settings the heating
elements are energised for shorter, non-overlapping equal
periods.

In this way the fluctuations in line voltage
caused by the grill heater as a whole tend to even out
and be less marked.

During normal operation, the power dissipated
in the elements is dependent upon the user control.
However the control circuitry is arranged also to have a
boost mode, which is effective for a period following
initial switch-on of the elements during which the
elements are energised simultaneously and continuously
(ie. with a 100% duty cycle) so that the elements warm up
rapidly to working temperature.

The duration of the on periods of the two
heating elements in the normal mode is determined by
generating two ramp signals which are inverted relative to
one another and are each compared with a reference signal,
representing the user set-point; the circuitry is arranged
so that one of the heating elements is energised during
each cycle of the ramps until one of the ramps exceeds the
reference signal while the other heating element is
energised for the remainder of the cycle after the other
of the ramps exceeds the reference level.   Of course,

- 4 -

instead of generating two mutually inverted ramps, a single ramp could be compared with two, mutually inverted reference signals in order to determine the on periods of the heating elements.

The invention will be further described with reference to the accompanying drawings, in which:-

Figure 1 is a circuit diagram, partially in block form, of one embodiment of the present invention;

Figures 2A-2D are timing diagrams illustrating the operation of the embodiment of Figure 1;

Figures 3, 4 and 5 show variants of the embodiment of Figure 1; and

Figure 6 shows in greater detail part of the circuitry of Figure 5.

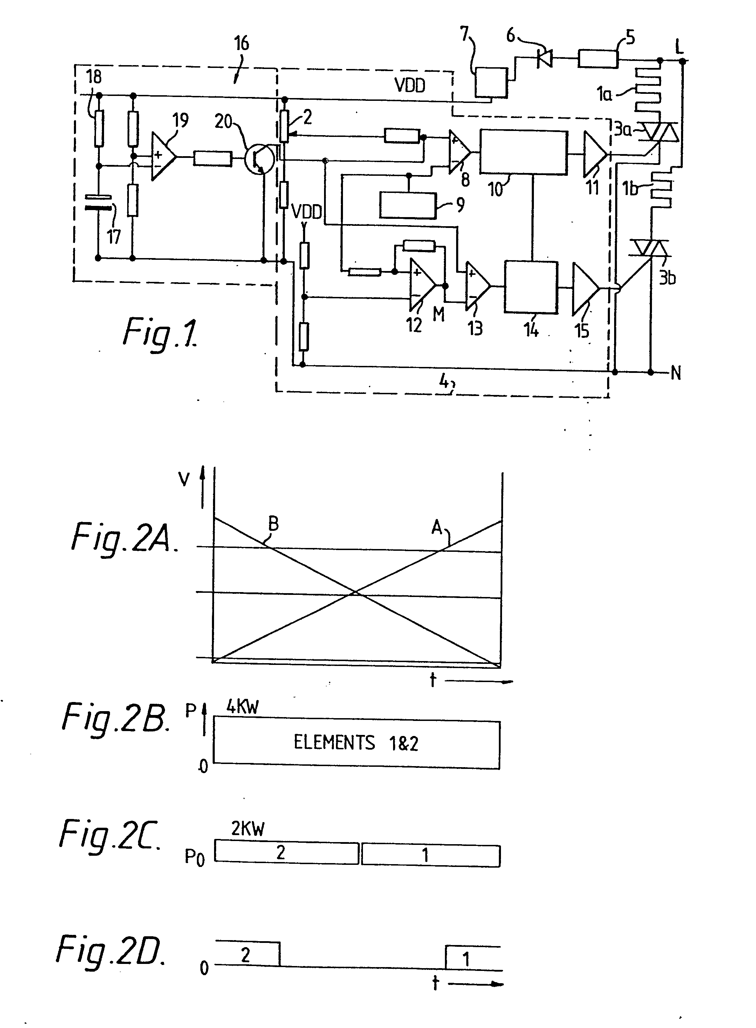

The circuitry shown in Figure 1 is for controlling the power supplied to two heating elements 1a and 1b which are arranged in side-by-side relationship in the grill of a domestic cooker in dependence upon the setting of a user-operable control, namely a potentiometer 2. To this end, the heating elements 1a and 1b are connected in series with respective triacs 3a and 3b across the mains supply and appropriate gating pulses for turning the triacs 3a and 3b on are generated by means of the control circuitry 4 surrounded by dotted lines in Figure 1.

The control circuitry 4 is energised from the mains supply via a voltage dropping resistor 5, a diode 6 and a voltage regulator 7.

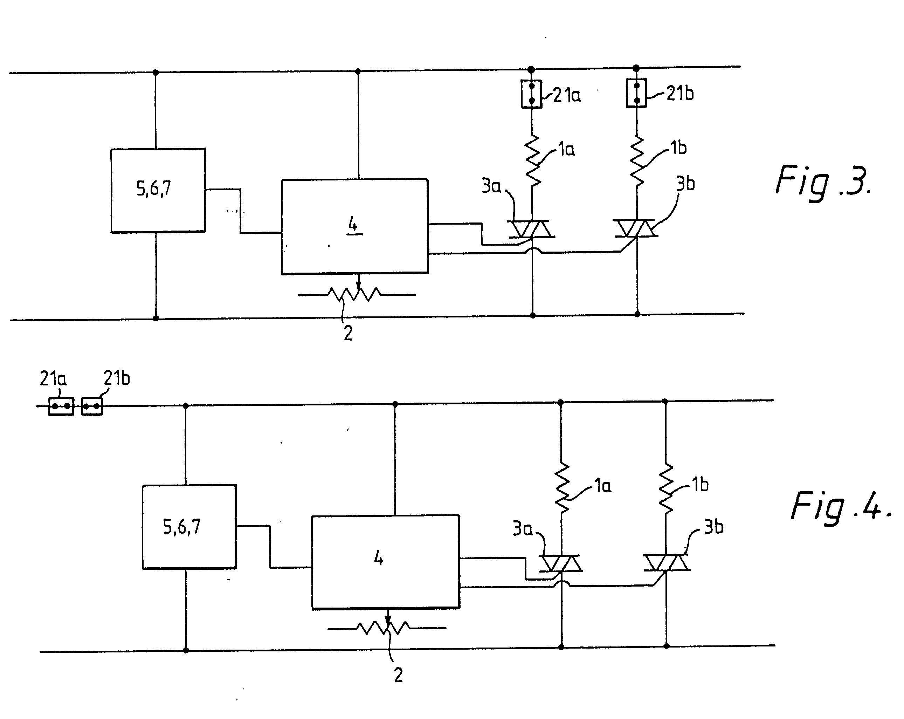

In the control circuitry 4, the voltage picked off at the wiper of potentiometer 2 is applied to one input of a comparator 8, whose other input is connected to the output (A in Figure 2A) of a free running ramp generator 9 having a period of several seconds. When the ramp voltage exceeds the reference voltage from potentiometer 2, the output of comparator 8 changes state and triggers operation of control logic 10. This control logic 10 incorporates a zero crossing detector and
appropriate gating circuitry so that at each zero crossing
of the mains supply following the change in state of the
output of comparator 8 until the end of that cycle of the
ramp, the control logic 10 delivers a gating pulse via
output amplifier 11 to the gate of triac 3a to energise
the heating element 1a, which is thus energised for the
remainder of that half cycle of the mains supply.

The output of the ramp generator 9 is also applied
to an amplifier 12 which is arranged to invert the ramp
so that the ramp falls with time as indicated by B in
Figure 2A. The inverted ramp is applied to one input of
comparator 13, the other input of which receives the
voltage picked off from the potentiometer 2. Control
logic 14, which is connected to control logic 10, is
arranged so that until the inverted ramp B falls below the
reference level, gating pulses are delivered via output
amplifier 15 to the triac 3b to energise the heating
element 1b. For the remaining mains half cycles in each
cycle of the ramp, the triac 3b is turned off. Thus
during each cycle of the ramp, the heating elements 1a and
1b are energised for equal periods at opposite ends of each
ramp cycle as indicated in Figure 2D. As indicated by
Figure 2C, turning the potentiometer 2 to the maximum
user-settable value extends the periods of energisation of
the heating elements 1a and 1b so that one is turned off
as the other is turned on.

As in our copending Application No. 7940618, in
order to improve the response time of the heating elements
when started from cold, the heating elements 1a and 1b are
wound so that they produce their rated output, each of 1.3 kW
when energised at less than the nominal mains voltage
so that when energised continuously for a long period of
time at the mains voltage they are overrun and each produce
approximately twice their rated output. The circuitry generally designated 16 makes the elements 1a and 1b be overrun when the circuitry is first energised. A capacitor 17 is initially discharged and when the control circuitry is first energised, charges slowly over a period of a minute or two via a resistor 18. The voltage across the capacitor 17 is compared by a comparator 19 with a reference voltage and until the voltage across capacitor 17 exceeds the reference voltage, a transistor 20 is turned on which pulls the inverting inputs of comparators 8 and 13 down to the zero volt rail. This has the effect that until the output of comparator 19 changes state, both elements 1a and 1b are energised throughout each cycle of the ramp as indicated in Figure 2B thereby dissipating a mean power of 4 kW and rapidly heating to operating temperature. Once the capacitor 17 has charged, the transistor 20 is turned off and proportional control of the energisation of the heating elements, in dependence upon the setting of the potentiometer 2, takes place. The heating elements 1a and 1b are not overrun during proportional operation because in those circumstances each is energised with a maximum duty cycle of 50%.

Numerous modifications of the above described embodiment will be apparent to those skilled in the art. For example, the reference voltage used to control the energisation of the heating elements need not be produced by the potentiometer 2 but could be produced in a number of other ways, for example by means of a digital to analog converter connected to the output of a touch-controlled counter as in our British Patent No. 1464093. Furthermore, the circuitry 16 could be arranged so that instead of overriding the proportional operation only when the circuitry is first energised, it is actuated when the user-set level is increased. Equally, as in our British Patent No. 1464093, an additional circuit could be provided to de-energise the heating elements 1a and 1b for a predetermined period following a reduction in the user-set level.

Although the invention has been described with reference to a partially analog implementation, it will be appreciated that the circuitry could be entirely digital, and be implemented in large part by a microprocessor which could also control the various other heating elements of the electric cooker.

The invention is not exclusively confined to split loads, i.e. two partial loads under control of the same user-operable control. The invention could also be applied to a number of independent loads within the same device, such as the hot plates of an electric cooker.

Although the invention has been described with reference to open-loop control of the energisation of the heating elements so that the user setting determines the power supplied to the heating elements, it is also possible for the invention to be applied to closed loop control, for example where the user-operable control sets a desired temperature and a suitable temperature sensor is provided to monitor the output of the heating elements.

As shown in Figure 3, in order to protect the appliance against failure of the triacs 3a, 3b or overheating of the heating elements 1a, 1b, in series between the live side of the main supply and the live end of each of the heating elements is a respective bi-metallic trip 21a, 21b which is either in thermal contact with the associated heating element or so disposed that its temperature bears a one to one relationship with that of the heating element and each of the two bi-metallic trips 21a, 21b is arranged to have a thermal time constant longer by a significant amount, say thirty percent, than the fast warm up period during which the heating elements 1a and 1b are energised. This is, of course, so that the trips do not trip out during the fast warm up period. The bi-metallic trips are preferably of a type such that they require to be manually reset e.g. by a service engineer so that the heating elements will not be re-energised until the fault is cured.

Figure 4 shows an arrangement which is similar to that of Figure 3 except that here the bi-metallic trips 21a, 21b are arranged at the live input of the circuitry so that in the event of either trip operating, the circuitry, heating elements and triacs are fully isolated. In this embodiment, the trips may be in thermal contact with the associated triacs or alternatively act as current trips set to operate at a current value in excess of that encountered during normal operation.

Figure 11 shows an embodiment of the present invention where instead of (or in addition to) the · thermal trips 21a, 21b circuitry, generally designated 40, is provided to protect the appliance against failure of the triacs 3a, 3b. The most serious failure mode of a triac is, of course, where it forms effectively a short circuit between its anode and cathode. This can particularly be a problem where, as in the illustrated embodiments, the heating elements 1a, 1b are designed so as to produce their rated output at rather less than the nominal mains voltage, say 180 volts rms, so that they are effectively overrun during the fast warm-up period and thus heat more rapidly. Continuous energisation at that level would obviously be undesirable.

Broadly, the protection circuitry 40 checks the relationship between the gating signals applied to the triacs and the potential difference across them and causes a relay coil 41 to de-energise thus opening an associated contact 42 if the triac is not turned off during periods when it is supposed to be.

The fault detection part 43 of the circuitry 20 is shown in more detail in Figure 12. It comprises a potential divider comprising resistors 44 and 45 connected across the anode and cathode of the associated triac, the common junction of these resistors being connected to a charge pump comprising diode 46 and capacitor 47, the capacitor 47 being shunted by a resistor 48. A voltage is thus developed across the resistors 47 which, by suitable choice of the associated time constant, can represent the average rectified voltage across the triac over one or several cycles of the mains supply waveform. When the triac is turned on or when it fails and short circuits, this voltage will fall. The voltage across capacitor 47 is applied to one input of comparator 49, the other input of which is connected to a reference voltage so that the output of comparator 49 goes high when the voltage across the associated triac is such as to indicate that it is on either by correct operation or by failure. These two possibilities are distinguished by a provision of an inverter 50 connected to the output of the associated triac-driving (not shown) of the controller 5 and having its output applied along with the output of comparator 49 to an AND gate 51. Thus when the output of inverter 50 is high, indicating that no gating signal is being applied to the triac and the output of comparator 49 is high indicating that the triac is turned on, the output of AND gate 51 goes high indicating a fault condition. The outputs from the two circuits 43 are connected to an OR gate 52, the output of which is connected to a driver circuit 53 driving the relay coil 41.

Thus in the event that the circuitry 40 detects that either triac is on when it should be off, the relay coil 41 is de-energised so that the contact 42 opens and the supply to the heating elements is interrupted. Preferably the relay is of a type requiring manual resetting so that it cannot be reset until the fault has been attended to. It is preferred that the relay is de-energised in the event of a fault condition so that failure of the relay drive circuitry will also result in isolation of the heating elements.

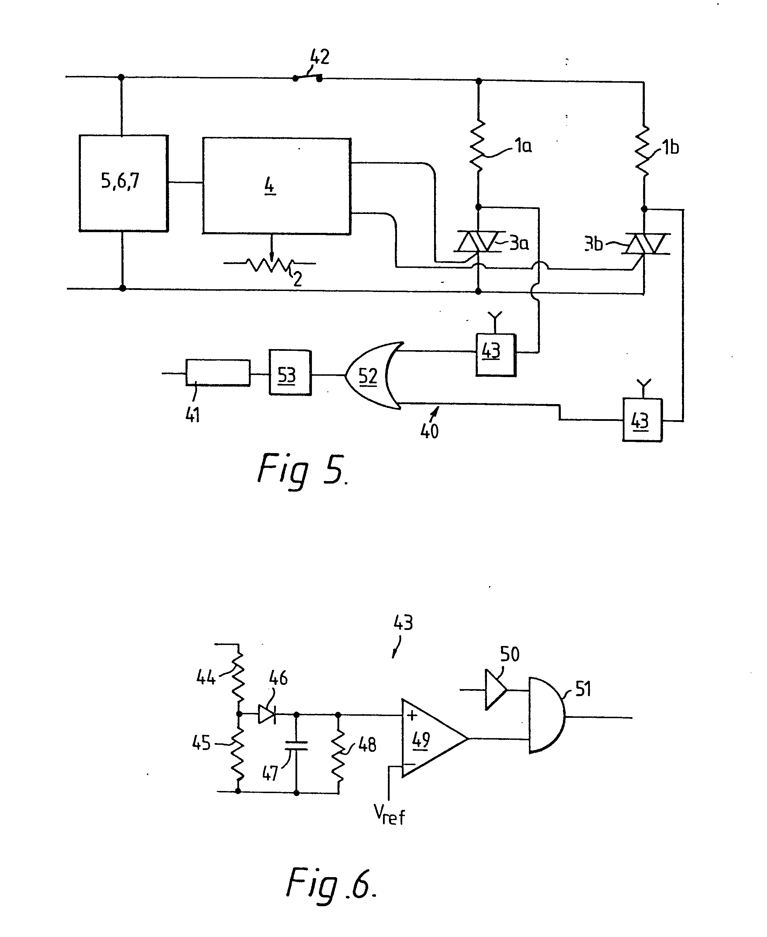

It will be appreciated that the protection circuitry 40 in Figure 5 may be incorporated on a common integrated circuit with the control circuitry 4. Alternatively, protection circuitry such as 40 or employing a similar principle or operation could be provided for a number of independently controllable loads on a common integrated circuit. For this purpose, the integrated circuit would have a number of separate inputs and outputs appropriate to the number of loads to be controlled.

In Figures 3 to 6 instead of single pole isolation devices double pole isolation devices may be used, one pole being in the live supply line and one in the neutral supply line. Instead of isolation devices such as bi-metallic trips and isolating relays, other isolating arrangements such as fuses with associated crowbar circuits may be provided.

- 11 -

C L A I M S

1. A power control apparatus comprising: a resistive load comprising at least two partial loads; and control circuitry for cyclically energising the partial loads, characterised in that the control circuitry is arranged to energise the loads in time interleaving relationship with one another.

2. Apparatus according to claim 1 characterised in that the control circuitry can operate in two modes, namely a first mode in which the partial loads are energised as set forth in claim 1 and a second mode in which the partial loads are energised simultaneously.

3. Apparatus according to claim 2 characterised in that the control circuitry is arranged so as to operate in said second mode for a period following an initial switch-on of the loads.

4. Apparatus according to claim 1, 2 or 3 characterised in that the control circuitry is arranged to vary the power delivered to the partial loads during their cyclical energisation in dependence upon the setting of a user operable control.

5. Apparatus according to claim 4 characterised in that the control circuitry is arranged to operate in said second mode for a period following an increase in the setting of the user operable control.

6. Apparatus according to claim 4 or 5 characterised in that the control circuitry is arranged to vary the duty cycles of energisation of the partial loads in dependence upon the setting of the user operable control.

- 12 -

7. Apparatus according to claim 6 characterised in that the control circuitry includes a ramp generator and a comparator for comparing the output of the ramp generator with a reference signal for determining the period of energisation of one of the partial loads.

8. Apparatus according to claim 6 or 7 characterised in that there are two partial loads and means are provided for producing either two ramp signals which are inverted relative to one another and one reference signal or two reference signals which are inverted relative to one another and one ramp signal and the apparatus includes a pair of comparators for comparing the ramp or ramps with the reference signals or signal for determining the periods of energisation of respective ones of partial loads.

9. An electric cooker comprising a heater including a pair of electrically powered heating elements constituting partial loads, a user operable control, and characterised by control circuitry for cyclically energising the heating elements in time interleaving relationship with one another to apply to the partial loads a power level dependent upon the setting of the user operable control.

10. Apparatus according to any one of the preceding claims characterised in that the or each partial load has associated with it a controlled conduction element such as a triac for controlling the current supplied thereto and means are associated with the controlled conductor element for detecting a fault condition thereof and isolating the partial load from the mains supply.

11. Apparatus according to claim 10 characterised in that said means comprises a device responsive to the temperature of the controlled conduction element.

12. Apparatus according to claim 10 characterised in that said means comprises a device responsive to the current through the heater.

13. Apparatus according to claim 10 characterised in that said means comprises a device arranged to detect occasions when signals from the control circuitry dictate that the controlled conduction element should be off but the element is in fact on.

14. Apparatus according to claim 13 characterised in that the device is arranged to monitor gating signals to the controlled conduction element and the voltage across it or the current through its controlled conduction path.

15. An electric cooker incorporating power control apparatus according to any one of claims 1 to 14.

Fig.1.

Fig.2A.

Fig.2B.

Fig.2C.

Fig.2D.

Fig .3.

Fig .4.

0033593

Fig 5.

Fig .6.